(19) **Europäisches Patentamt / European Patent Office / Office européen des brevets**

(11) **EP 3 956 059 B1**

(12) **FASCICULE DE BREVET EUROPEEN**

(45) Date de publication et mention de la délivrance du brevet:
**18.03.2026 Bulletin 2026/12**

(21) Numéro de dépôt: **20717214.9**

(22) Date de dépôt: **14.04.2020**

(51) Classification Internationale des Brevets (IPC):
**B01J 29/76** (2006.01)   **B01D 53/94** (2006.01)
**C01B 39/48** (2006.01)

(52) Classification Coopérative des Brevets (CPC):
**B01J 29/72; B01J 29/74; B01J 29/76; B01J 29/78; B01J 35/56; B01J 37/0246; C01B 39/48;**
B01D 2255/20761; B01D 2255/50; B01J 2229/186; Y02T 10/12

(86) Numéro de dépôt international:
**PCT/EP2020/060474**

(87) Numéro de publication internationale:
**WO 2020/212354 (22.10.2020 Gazette 2020/43)**

(54) **SYNTHESE RAPIDE D'UN CATALYSEUR COMPRENANT UNE ZEOLITHE DE TYPE STRUCTURAL AFX ET AU MOINS UN METAL DE TRANSITION POUR LA REDUCTION SELECTIVE DE NOX**

SCHNELLE SYNTHESE EINES KATALYSATORS MIT EINEM ZEOLITH MIT AFX-STRUKTUR UND MINDESTENS EINEM ÜBERGANGSMETALL ZUR SELEKTIVEN NOX-REDUKTION

RAPID SYNTHESIS OF A CATALYST COMPRISING A ZEOLITE HAVING AN AFX STRUCTURE AND AT LEAST ONE TRANSITION METAL FOR SELECTIVE NOX REDUCTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.04.2019 FR 1904198**

(43) Date de publication de la demande:
**23.02.2022 Bulletin 2022/08**

(73) Titulaire: **IFP Energies nouvelles**
**92852 Rueil-Malmaison Cedex (FR)**

(72) Inventeurs:
• **HARBUZARU, Bogdan**
  **92852 RUEIL-MALMAISON CEDEX (FR)**
• **BERTHOUT, David**
  **92852 RUEIL-MALMAISON CEDEX (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
WO-A1-2016/077667    WO-A1-2017/202495
WO-A1-2019/224081    WO-A1-2019/224083
US-A1- 2016 096 169

• MARTÍN NURIA ET AL: "Cage-based small-pore catalysts for NH3-SCR prepared by combining bulky organic structure directing agents with modified zeolites as reagents", APPLIED CATALYSIS B: ENVIRONMENTAL, ELSEVIER, AMSTERDAM, NL, vol. 217, 29 May 2017 (2017-05-29), pages 125 - 136, XP085112832, ISSN: 0926-3373, DOI: 10.1016/ J.APCATB.2017.05.082
• DUSTIN W FICKEL ET AL: "The ammonia selective catalytic reduction activity of copper-exchanged small-pore zeolites", APPLIED CATALYSIS B: ENVIRONMENTAL, ELSEVIER, AMSTERDAM, NL, vol. 102, no. 3, 9 December 2010 (2010-12-09), pages 441 - 448, XP028139896, ISSN: 0926-3373, [retrieved on 20101216], DOI: 10.1016/J.APCATB.2010.12.022

- WANG AIYONG ET AL: "NH3-SCR on Cu, Fe and Cu+Fe exchanged beta and SSZ-13 catalysts: Hydrothermal aging and propylene poisoning effects", CATALYSIS TODAY, vol. 320, 7 October 2017 (2017-10-07), pages 91 - 99, XP085513181, ISSN: 0920-5861, DOI: 10.1016/ J.CATTOD.2017.09.061

- XIAOJIAO LIU ET AL: "Ammonia selective catalytic reduction of NO over Ce-Fe/Cu-SSZ-13 catalysts", RSC ADVANCES, vol. 5, no. 104, 1 January 2015 (2015-01-01), pages 85453 - 85459, XP055552933, DOI: 10.1039/C5RA16072C

**Description**

## DOMAINE TECHNIQUE

L'invention a pour objet un procédé de préparation d'un catalyseur à base d'une zéolithe de type structural AFX obtenue par synthèse rapide et d'au moins un métal de transition.

## TECHNIQUE ANTERIEURE

Les émissions d'oxydes d'azote (NOx) qui résultent de la combustion de combustibles fossiles sont une préoccupation majeure pour la société. Des normes de plus en plus sévères sont mises en place par les instances gouvernementales afin de limiter l'impact des émissions issues de la combustion sur l'environnement et sur la santé. Pour les véhicules légers en Europe dans le cadre de la réglementation Euro 6c/ Euro6d-temp les émissions de NOx et de particules doivent atteindre un niveau très bas pour l'ensemble des conditions de fonctionnement. Le nouveau cycle de conduite WLTC (Worldwide harmonized Light vehicles Test Cycle) et la réglementation des émissions en conduite réelle (RDE) associée aux facteurs de conformité, exige le développement d'un système de dépollution hautement efficaces pour atteindre ces objectifs. La réduction catalytique sélective, désignée par l'acronyme anglo-saxon « SCR » pour « Selective Catalytic Reduction », apparait comme une technologie efficace pour éliminer les oxydes d'azote dans les gaz d'échappement riches en oxygène, typiques des moteur Diesel et à allumage commandé en mélange pauvre. La réduction catalytique sélective est réalisé grâce à un réducteur, généralement l'ammoniac, et peut ainsi être désignée par $NH_3$-SCR. L'ammoniac ($NH_3$) impliqué dans le processus SCR est généralement généré via la décomposition d'une la solution aqueuse d'urée (AdBlue ou DEF), et produit $N_2$ et $H_2O$ lors de la réaction avec NOx.

Les zéolithes échangées avec des métaux de transitions sont notamment utilisées comme catalyseurs pour les applications $NH_3$-SCR, dans les transports. Les zéolithes à petit pores, en particulier les chabazites échangées au cuivre, sont particulièrement adaptées. Elles existent commercialement sous la forme silico-aluminophosphate Cu-SAPO-34 et aluminosilicates Cu-SSZ-13 (ou Cu-SSZ-62). Leur tenue hydrothermale et leur efficacité de conversion des NOx en font les références actuelles. Cependant, les normes étant de plus en plus contraignantes, les performances des catalyseurs doivent encore être améliorées.

L'utilisation des zéolithes de type structural AFX pour les applications $NH_3$-SCR est connue, mais peu de travaux évaluent l'efficacité de catalyseurs mettant en œuvre cette zéolithe.

Fickel et al. (Fickel, D. W., & Lobo, R. F. (2009), The Journal of Physical Chemistry C, 114(3), 1633-1640) ont étudié l'utilisation d'une SSZ-16 (type structural AFX) échangée au cuivre pour l'élimination des NOx. Cette zéolithe est synthétisée conformément au brevet US 5,194,235, dans lequel le cuivre est introduit par échange ionique en utilisant le sulfate de cuivre(II) à 80°C pendant 1h. Des résultats récents (Fickel, D. W., D'Addio, E., Lauterbach, J. A., & Lobo, R. F. (2011), 102(3), 441-448) montrent une excellente conversion et une bonne tenue hydrothermale pour un chargement à 3,78% poids en cuivre.

Des travaux sur la synthèse de zéolithes de type structural AFX ont été effectués avec différents agents structuraux organiques (Lobo, R. F., Zones, S. I., & Medrud, R. C. (1996), Chemistry of materials, 8(10), 2409-2411, Martin Nuria et al., APPLIED CATALYSIS B: ENVIRONMENTAL, vol. 217, 29 mai 2017, pages 125-136 ) ainsi que des travaux d'optimisation de la synthèse (Hrabanek, P., Zikanova, A., Supinkova, T., Drahokoupil, J., Fila, V., Lhotka, M., Bernauer, B. (2016), Microporous and Mesoporous Materials, 228, 107-115).

Wang et al. (Wang, D. et al., CrystEngComm., (2016), 18(6), 1000-1008) ont étudié le remplacement de l'agent structurant TMHD par un mélange TEA-TMA pour la synthèse du silicoaluminophosphate SAPO-56 et obtiennent des phases non désirées SAPO-34 et SAPO-20. L'incorporation de métaux de transition n'est pas abordée.

La demande US 2016/0137518 décrit une zéolithe AFX quasi-pure, sa synthèse à partir de sources de silice et d'alumine en présence d'un agent structurant de type 1,3-Bis(1-adamantyl)imidazolium hydroxyde, la préparation d'un catalyseur à base de zéolithe AFX échangée avec un métal de transition et son utilisation pour des applications $NH_3$-SCR. Aucune forme particulière de zéolithe AFX n'est évoquée.

Plus récemment, la demande US 2018/0093259 présente la synthèse de zéolithes à petits pores, comme la zéolithe de type structural AFX, à partir d'une zéolithe de type FAU en présence d'un structurant organique, comme le hydroxide de 1,3-bis(1-adamantyl)imidazolium et d'une source de métal alcalino-terreux. Elle présente également des applications de la zéolithe de type structural AFX obtenue, en particulier l'utilisation de cette zéolithe comme catalyseur de réduction de NOx, après échange avec un métal comme le fer. Parallèlement, la demande US 2016/0096169A1 présente l'utilisation dans la conversion des NOx, d'un catalyseur à base d'une zéolithe de type structural AFX ayant un rapport Si/Al allant du 15 à 50 échangée avec un métal, la zéolithe AFX étant obtenue à partir d'un agent structurant de type hydroxyde de 1,3-Bis(1-adamantyl)imidazolium. Les résultats obtenus, dans la conversion des NOx, montrent en particulier une sélectivité des catalyseurs préparés selon les demandes US 2018/0093259 et US 2016/0096169 vers le protoxyde d'azote ne dépassant pas 20 ppm.

Le document JP 2014-148441 décrit la synthèse d'un solide apparenté à une zéolithe AFX, en particulier d'une SAPO-56 comprenant du cuivre utilisable pour la réduction des $NO_x$. Le solide est synthétisé, puis ajouté à un mélange comprenant un alcool et un sel de cuivre, le tout étant calciné. Le cuivre est donc ajouté après la formation du solide SAPO-56 apparenté à la zéolithe de type structural AFX. Ce solide échangé semble présenter une résistance accrue à la présence d'eau.

Ogura et al. (Bull. Chem. Soc. Jpn. 2018, 91, 355-361) montrent la très bonne activité d'une zéolithe de type SSZ-16 échangée au cuivre par rapport à d'autres structures zéolithiques et ce même après vieillissement hydrothermal.

WO 2017/080722 présente la synthèse directe d'une zéolithe comprenant du cuivre. Cette synthèse impose de partir d'une zéolithe de type structural FAU et d'utiliser un agent complexant TEPA et un élément $M(OH)_x$ pour aboutir à différents types de zéolithes, principalement de type CHA. Des zéolithes de type ANA, ABW, PHI et GME sont également produites.

La demanderesse a découvert qu'un catalyseur à base d'une zéolithe de type structural AFX préparé selon un mode de synthèse rapide particulier et d'au moins un métal de transition, en particulier du cuivre, présentait des performances intéressantes de conversion des $NO_x$ et de sélectivité vers $N_2O$. Les performances de conversion des NOx, en particulier à basse température (T<250°C), sont notamment supérieures à celles obtenues avec des catalyseurs de l'art antérieur, tels que les catalyseurs à base de zéolithe de type structural AFX échangée au cuivre, tout en conservant une bonne sélectivité vers le protoxyde d'azote $N_2O$.

## RESUME DE L'INVENTION

L'invention concerne un procédé de préparation d'un catalyseur à base d'une zéolithe de type structural AFX et d'au moins un métal de transition comprenant au moins les étapes suivantes :

i) le mélange en milieu aqueux, d'au moins une source d'au moins un oxyde de silicium $SiO_2$, d'au moins une source d'au moins un oxyde d'aluminium $Al_2O_3$, d'un composé organique azoté R, également appelé structurant spécifique, le dihydroxyde de 1,6-bis(méthylpipéridinium)hexane, d'au moins un métal alcalin et/ou un métal alcalino-terreux M de valence n, n étant un entier supérieur ou égal à 1, le mélange réactionnel présentant la composition molaire suivante :

$SiO_2/Al_2O_3$ compris entre 2,00 et 100, de préférence entre 12 et 40
$H_2O/SiO_2$ compris entre 5 et 60, de préférence entre 10 et 40
$R/SiO_2$ compris entre 0,05 à 0,50, de préférence entre 0,10 et 0,40
$M_{2/n}O/SiO_2$ compris entre 0,05 à 0,40, de préférence entre 0,15 et 0,30,
dans laquelle M est le sodium l'étape i) étant conduite pendant une durée permettant l'obtention d'un mélange homogène appelé gel précurseur ;

ii) le traitement hydrothermal dudit gel précurseur obtenu à l'issue de l'étape i) sous pression autogène à une température comprise entre 120°C et 250°C, de préférence entre 150°C et 230°C, pendant une durée comprise entre 2 et 12 heures, de préférence entre 2 et 10 heures jusqu'à ce que ladite zéolithe de type structural AFX se forme.

iii) au moins un échange ionique comprenant la mise en contact dudit solide obtenu à l'issue de l'étape précédente, avec une solution comprenant au moins une espèce apte à libérer un métal de transition, en particulier le cuivre, en solution sous forme réactive sous agitation à température ambiante pendant une durée comprise entre 1 heure et 2 jours, le métal de transition étant le cuivre et/ou le fer et la teneur en métal(aux) de transition introduit(s) par l'étape d'échange ionique iii) étant comprise <u>entre 0,5 à 6% massique, de préférence entre 0,5 et 5% massique, de manière plus préférée entre 1 et 4% massique par rapport à la masse totale du catalyseur final anhydre,</u>

iv) un traitement thermique comprenant avantageusement un séchage du solide obtenu à l'étape (ii) ou (iii) précédente à une température comprise entre 20 et 150°C, de préférence entre 60 et 100°C, pendant une durée comprise entre 2 et 24 heures, suivi d'au moins une calcination, sous air, éventuellement sec, à une température comprise entre 450 et 700°C, de préférence entre 500 et 600°C pendant une durée comprise entre 2 et 20 heures, de préférence entre 6 et 16 heures, de manière plus préférée entre 8 et 13 heures, le débit d'air éventuellement sec étant de manière préférée compris entre 0,5 et 1,5 L/h/g de solide à traiter, de manière plus préférée compris entre 0,7 et 1,2 L/h/g de solide à traiter.

Au moins une source d'au moins un oxyde de silicium $SiO_2$, et/ou au moins une source d'au moins un oxyde d'aluminium $Al_2O_3$ peu(ven)t être au moins une zéolithe de type structural FAU ayant un ratio molaire $SiO_2/Al_2O_3$ compris entre 2,00 et 100.

Les étapes iii) et iv) peuvent être interverties, et/ou éventuellement répétées.

On peut ajouter des germes cristallins d'une zéolithe de type structural AFX au mélange réactionnel de l'étape i), de préférence en quantité comprise entre 0,01 et 10% de la masse totale des sources desdits éléments tétravalent (Si) et trivalent (Al) sous leur forme oxyde ($SiO_2$ et $Al_2O_3$) utilisées dans le mélange réactionnel, lesdits germes cristallins n'étant pas pris en compte dans la masse totale des sources des éléments tétravalent et trivalent.

L'étape i) peut comprendre une étape de mûrissement du mélange réactionnel à une température comprise entre 20 et 80°C, avec ou sans agitation, pendant une durée comprise entre 30 minutes et 24 heures.

L'étape iii) d'échange ionique est avantageusement réalisée par mise en contact du solide avec une solution comprenant une seule espèce apte à libérer un métal de transition ou par mises en contact successives du solide avec différentes solutions comprenant chacune au moins une, de préférence une seule, espèce apte à libérer un métal de transition, de préférence les métaux de transition des différentes solutions étant différents entre eux.

Ledit au moins un métal de transition libéré dans la solution d'échange de l'étape iii) peut être sélectionné dans le groupe formé des éléments suivants : Fe ou Cu et de manière encore plus préférée ledit métal de transition est Cu.

La teneur en métal(aux) de transition introduit par l'étape d'échange ionique iii) est avantageusement comprise entre 0,5 à 6% massique, de préférence entre 0,5 et 5% massique, de manière plus préférée entre 1 et 4% massique, par rapport à la masse totale du catalyseur final anhydre.

La description concerne également le catalyseur à base d'une zéolithe AFX et d'au moins un métal de transition susceptible d'être obtenu ou directement obtenu par le procédé de préparation.

Le métal ou les métaux de transition peut (peuvent) être sélectionné(s) dans le groupe formé des éléments suivants : Fe ou Cu et de manière encore plus préférée ledit métal de transition est Cu.

La teneur totale des métaux de transition est avantageusement comprise entre 0,5 et 6% massique, de préférence entre 0,5 et 5% massique, de manière plus préférée entre 1 et 4% massique, par rapport à la masse totale du catalyseur final anhydre.

Le catalyseur comprend du cuivre, seul, à une teneur comprise entre 0,5 et 6% poids, de préférence entre 0,5 et 5% poids, de manière très préférée entre 1 et 4% poids par rapport à la masse totale du catalyseur final anhydre.

Le catalyseur comprend du cuivre en association avec au moins un autre métal de transition choisi dans le groupe formé par Fe, Nb, Ce, Mn, la teneur en cuivre du catalyseur étant comprise entre 0,05 et 2% massique, de préférence 0,5 et 2% massique, la teneur dudit au moins un autre métal de transition étant comprise entre 1 et 4% massique par rapport à la masse totale du catalyseur final anhydre.

Dans encore un autre mode de réalisation, le catalyseur comprend du fer en association avec un autre métal choisi dans le groupe formé par Cu, Nb, Ce, Mn, la teneur en fer étant comprise entre 0,05 et 2% massique, de préférence entre 0,5 et 2% massique, la teneur dudit autre métal de transition étant comprise entre 1 et 4% massique, par rapport à la masse totale du catalyseur final anhydre.

La description concerne également un procédé de réduction sélective des NOx par un réducteur tel que $NH_3$ ou $H_2$ mettant en œuvre un catalyseur tel que décrit précédemment ou un catalyseur susceptible d'être obtenu ou directement obtenu par le procédé de préparation.

Le catalyseur peut être mis en forme par dépôt sous forme de revêtement, sur une structure nid d'abeilles ou une structure à plaques.

La structure nid d'abeilles peut être formée de canaux parallèles ouverts aux deux extrémités ou peut comporter des parois poreuses filtrantes pour lesquelles les canaux parallèles adjacents sont alternativement bouchés de part et d'autre des canaux.

La quantité de catalyseur déposé sur ladite structure est avantageusement comprise entre 50 à 180 g/L pour les structures filtrantes et entre 80 et 200 g/L pour les structures avec canaux ouverts.

Le catalyseur peut être associé à un liant tel que la cérine, l'oxyde de zirconium, l'alumine, la silice-alumine non zéolithique, l'oxyde de titane, un oxyde mixte de type cérine-zircone, un oxyde de tungstène et/ou une spinelle pour être mis en forme par dépôt sous forme de revêtement.

Ledit revêtement peut être associé à un autre revêtement présentant des capacités d'adsorption de polluants en particulier de NOx, de réduction de polluants en particulier des NOx ou favorisant l'oxydation de polluants.

Ledit catalyseur peut être sous forme d'extrudé, contenant jusqu'à 100% dudit catalyseur.

La structure revêtue par ledit catalyseur ou obtenue par extrusion dudit catalyseur peut être intégrée dans une ligne d'échappement d'un moteur à combustion interne.

## LISTE DES FIGURES

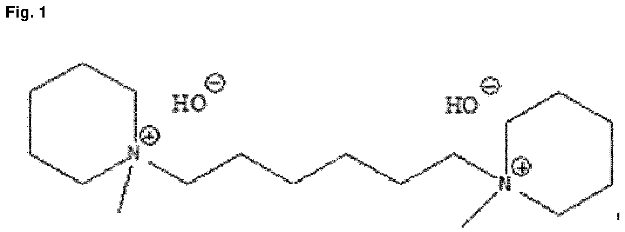

La Figure 1 représente la formule chimiques du composé organique azoté R qui est le structurant utilisé dans le procédé de synthèse selon l'invention.

La Figure 2 représente les diagrammes de diffraction de rayons X des zéolithes de type structural AFX contenant du cuivre obtenues selon les exemples 2 à 5.

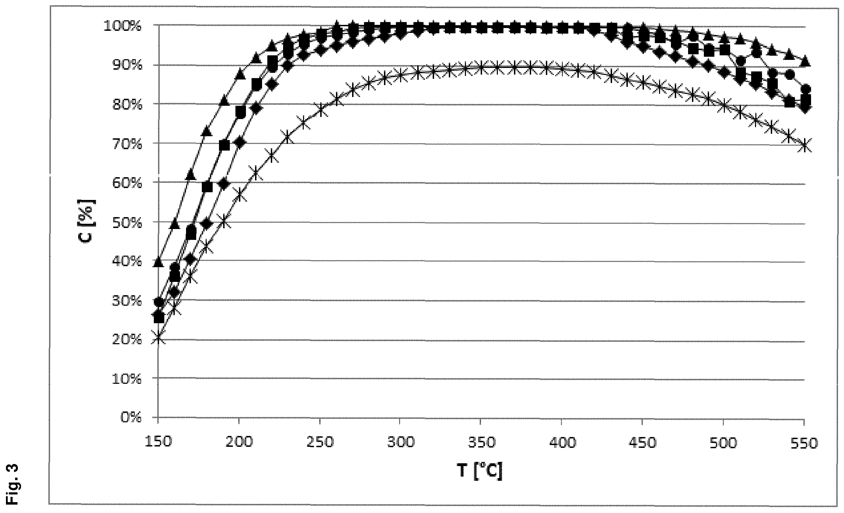

La Figure 3 représente la conversion C en % obtenue lors d'un test catalytique de réduction des oxydes d'azote (NOx) par l'ammoniac (NH$_3$) en présence d'oxygène (O$_2$) dans des conditions Standard SCR en fonction de la température T en °C pour un catalyseur suivant l'exemple 2 (CuAFX, selon l'invention, courbe symbolisée par les losanges), un catalyseur suivant l'exemple 3 (CuAFX780, selon l'invention, courbe symbolisée par les triangles), un catalyseur suivant l'exemple 4 (CuAFX720, selon l'invention, courbe symbolisée par les carrés), un catalyseur suivant l'exemple 5 (CuAFX600, selon l'invention, courbe symbolisée par les ronds) et un catalyseur suivant l'exemple 6 (CuSSZ16, comparatif, courbe symbolisée par les croix).

D'autres caractéristiques et avantages du procédé de synthèse selon l'invention, du catalyseur et de l'utilisation, apparaîtront à la lecture de la description ci-après d'exemples non limitatifs de réalisations, en se référant aux figures annexées et décrites ci-après.

## DESCRIPTION DES MODES DE REALISATION

La présente invention concerne un procédé de préparation d'un catalyseur comprenant une zéolithe de type structural AFX et au moins un métal de transition, comprenant au moins les étapes suivantes :

i) le mélange en milieu aqueux, d'au moins une source d'au moins un oxyde de silicium SiO$_2$, d'au moins une source d'au moins un oxyde d'aluminium Al$_2$O$_3$, ou d'au moins une zéolithe de type structural FAU ayant un ratio molaire SiO$_2$/Al$_2$O$_3$ compris entre 2,00 et 100, d'un composé organique azoté R, également appelé structurant spécifique, le dihydroxyde de 1,6-bis(méthylpiperidinium)hexane, d'au moins un métal alcalin et/ou un métal alcalino-terreux M de valence n, n étant un entier supérieur ou égal à 1, le mélange réactionnel présentant la composition molaire suivante :

SiO$_2$/Al$_2$O$_3$ compris entre 2 et 100, de préférence entre 12 et 40
H$_2$O/SiO$_2$ compris entre 5 et 60, de préférence entre 10 et 40
R/SiO$_2$ compris entre 0,05 à 0,50, de préférence entre 0,10 et 0,40
M$_{2/n}$O/SiO$_2$ compris entre 0,05 à 0,40, de préférence entre 0,15 et 0,30,
dans laquelle M est le sodium l'étape i) étant conduite pendant une durée permettant l'obtention d'un mélange homogène appelé gel précurseur ;

ii) le traitement hydrothermal dudit gel précurseur obtenu à l'issue de l'étape i) sous pression autogène à une température comprise entre 120°C et 250°C de préférence comprise entre 150°C et 230°C pendant une durée comprise entre 2 et 12 heures, de préférence comprise entre 2 et 10 heures jusqu'à ce que ladite zéolithe de type structural AFX se forme.

iii) au moins un échange ionique comprenant la mise en contact dudit solide obtenu à l'issue de l'étape ii) avec une solution comprenant au moins une espèce apte à libérer un métal de transition, en particulier le cuivre, en solution sous forme réactive sous agitation à température ambiante pendant une durée comprise entre 1 heure et 2 jours, le métal de transition étant le cuivre et/ou le fer et la teneur en métal(aux) de transition introduit(s) par l'étape d'échange ionique iii) étant comprise <u>entre 0,5 à 6% massique, de préférence entre 0,5 et 5% massique, de manière plus préférée entre 1 et 4% massique par rapport à la masse totale du catalyseur final anhydre;</u>

iv) un traitement thermique comprenant avantageusement un séchage du solide obtenu à l'étape (ii) ou (iii) précédente à une température comprise entre 20 et 150°C, de préférence entre 60 et 100°C, pendant une durée comprise entre 2 et 24 heures, suivi d'au moins une calcination, sous air, éventuellement sec, à une température comprise entre 450 et 700°C, de préférence entre 500 et 600°C pendant une durée comprise entre 2 et 20 heures, de préférence entre 6 et 16 heures, de manière plus préférée entre 8 et 13 heures, le débit d'air éventuellement sec étant de manière préférée compris entre 0,5 et 1,5 L/h/g de solide à traiter, de manière plus préférée compris entre 0,7 et 1,2 L/h/g de solide à traiter.

Les étapes iii) et iv) peuvent être interverties, et/ou éventuellement répétées.
La présente description concerne également le catalyseur comprenant une zéolithe de type structural AFX et au moins un métal de transition susceptible d'être obtenu ou directement obtenu par le procédé précédemment décrit.
La description concerne enfin l'utilisation d'un catalyseur dans un procédé de réduction sélective catalytique des NOx en présence d'un réducteur.

Le catalyseur (non revendiqué)

Le catalyseur comprend au moins une zéolithe de type AFX, et au moins un métal de transition additionnel, de préférence le cuivre.

Le métal ou les métaux de transition compris dans le catalyseur est (sont) sélectionné(s) parmi les éléments issus du groupe formé par les éléments des groupes 3 à 12 du tableau périodique des éléments incluant les lanthanides. En particulier, le métal ou les métaux de transition compris dans le catalyseur est (sont) sélectionné(s) dans le groupe formé des éléments suivants : FeCu.

De préférence, le catalyseur comprend du cuivre, seul ou associé avec Fe.

La teneur totale des métaux de transition est avantageusement comprise entre 0,5 à 6% massique, de préférence entre 0,5 et 5% massique, et de façon encore plus préférée entre 1 et 4% massique, par rapport à la masse totale du catalyseur final, sous sa forme anhydre.

Pour les catalyseurs qui ne contiennent que du cuivre comme métal de transition, la teneur se situe avantageusement entre 0,5 et 6%, de préférence entre 0,5 et 5%, et de manière plus préférée entre 1 et 4% poids par rapport à la masse totale du catalyseur final anhydre.

Pour les catalyseurs comprenant du cuivre et un autre élément comme, de préférence, Fe, Nb, Ce, Mn, la teneur en cuivre du catalyseur se situe entre 0,05 et 2% massique, de préférence 0,5 et 2% massique alors que celle de l'autre métal de transition se situe préférablement entre 1 et 4% massique, les teneurs en métaux de transition étant données en pourcentage massiques par rapport à la masse totale du catalyseur sec final.

Pour les catalyseurs qui ne contiennent que du fer comme métal de transition, la teneur en fer se situe entre 0,5 et 4% et encore préférablement entre 1,5 et 3,5% par rapport à la masse totale du catalyseur final anhydre.

Pour les catalyseurs comprenant du fer et un autre élément comme, de préférence Cu, Nb, Ce, Mn la teneur en fer du catalyseur se situe entre 0,05 et 2% massique, de préférence entre 0,5 et 2% massique alors que celle de l'autre métal de transition se situe préférablement entre 1 et 4% massique, les teneurs en métaux de transition étant données en pourcentage massiques par rapport à la masse totale du catalyseur sec final.

Le catalyseur peut également comprendre d'autres éléments, comme par exemple des métaux alcalins et/ou alcalino-terreux, par exemple le sodium, provenant notamment de la synthèse, en particulier des composés du milieu réactionnel de l'étape i) du procédé de préparation dudit catalyseur.

**Procédé de préparation du catalyseur**

**Etape i) de mélange**

Cette étape met en œuvre le mélange en milieu aqueux, d'au moins une source d'au moins un oxyde de silicium $SiO_2$, d'au moins une source d'au moins un oxyde d'aluminium $Al_2O_3$, et/ou d'au moins une zéolithe de type structural FAU ayant un ratio molaire $SiO_2/Al_2O_3$ compris entre 2,00 et 100, d'un composé organique azoté R, également appelé structurant spécifique, le dihydroxyde de 1,6-bis(méthylpipéridinium)hexane, d'au moins un métal alcalin et/ou un métal alcalino-terreux M de valence n, n étant un entier supérieur ou égal à 1, le mélange réactionnel présentant la composition molaire suivante :

$SiO_2/Al_2O_3$ compris entre 2 et 100, de préférence entre 12 et 40
$H_2O/SiO_2$ compris entre 5 et 60, de préférence entre 10 et 40
$R/SiO_2$ compris entre 0,05 à 0,50, de préférence entre 0,10 et 0,40
$M_{2/n}O/SiO_2$ compris entre 0,05 à 0,40, de préférence entre 0,15 et 0,30,
dans laquelle M le sodium l'étape i) étant conduite pendant une durée permettant l'obtention d'un mélange homogène appelé gel précurseur.

Dans la composition molaire du mélange réactionnel ci-dessus et dans l'ensemble de la description :

$SiO_2$ désigne la quantité molaire de l'élément tétravalent silicium (Si) exprimée sous forme oxyde, et $Al_2O_3$ désigne la quantité molaire de l'élément trivalent aluminium (Al) exprimée sous forme oxyde,

$H_2O$ la quantité molaire d'eau présente dans le mélange réactionnel,

R la quantité molaire dudit composé organique azoté,

$M_{2/n}O$ la quantité molaire exprimée sous forme oxyde de $M_{2/n}O$ par la source de métal alcalin et/ou de métal alcalino-terreux.

Conformément à l'invention, au moins une source d'oxyde SiO$_2$ est incorporée dans le mélange pour la mise en œuvre de l'étape (i) du procédé de préparation. La source de silicium peut être l'une quelconque desdites sources couramment utilisée pour la synthèse de zéolithes, par exemple de la silice en poudre, de l'acide silicique, de la silice colloïdale, de la silice dissoute ou du tétraéthoxysilane (TEOS). Parmi les silices en poudre, on peut utiliser les silices précipitées, notamment celles obtenues par précipitation à partir d'une solution de silicate de métal alcalin, des silices pyrogénées, par exemple du "CAB-O-SIL" et des gels de silice. On peut utiliser des silices colloïdales présentant différentes tailles de particules, par exemple de diamètre équivalent moyen compris entre 10 et 15 nm ou entre 40 et 50 nm, telles que celles commercialisées sous les marques déposées telle que "LUDOX". De manière préférée, la source de silicium est le LUDOX HS-40. Comme source d'oxyde SiO$_2$ on peut utiliser aussi au moins une zéolithe de type structural FAU ayant un ratio molaire SiO$_2$/Al$_2$O$_3$ compris entre 2,00 et 100 seule ou en mélange avec d'autres sources de SiO$_2$.

La source d'aluminium est de préférence de l'hydroxyde d'aluminium ou un sel d'aluminium, par exemple du chlorure, du nitrate, ou du sulfate, un aluminate de sodium, un alkoxyde d'aluminium, ou de l'alumine proprement dite, de préférence sous forme hydratée ou hydratable, comme par exemple de l'alumine colloïdale, de la pseudoboehmite, de l'alumine gamma ou du trihydrate alpha ou bêta. On peut également utiliser des mélanges des sources citées ci-dessus. Comme source d'oxyde Al$_2$O$_3$ on peut utiliser aussi au moins une zéolithe de type structural FAU ayant un ratio molaire SiO$_2$/Al$_2$O$_3$ compris entre 2,00 et 100 seule ou en mélange avec d'autres sources de Al$_2$O$_3$.

Conformément à l'invention, au moins une source de silice, et/ou au moins une source d'aluminium peu(ven)t également être au moins une zéolithe de type structural FAU ayant un ratio molaire SiO2/Al2O3 compris entre 2,00 et 100.

Conformément à l'invention, R est un composé organique azoté, le dihydroxyde de 1,6-bis(méthylpiperidinium) hexane, ledit composé étant incorporé dans le mélange réactionnel pour la mise en œuvre de l'étape (i), comme structurant organique.

Conformément à l'invention, au moins une source d'au moins un métal alcalin et/ou alcalino-terreux M de valence n, est mise en œuvre dans le mélange réactionnel de l'étape i), n étant un entier supérieur ou égal à 1, M étant de préférence choisi parmi le lithium, le potassium, le sodium, le magnésium et le calcium et le mélange d'au moins deux de ces métaux. De manière très préférée, M est le sodium.

De préférence, la source d'au moins un métal alcalin et/ou alcalino-terreux M est l'hydroxyde de sodium.

Il peut être avantageux d'additionner des germes d'une zéolithe de type structural AFX au mélange réactionnel au cours de ladite étape i) du procédé de l'invention afin de réduire le temps nécessaire à la formation des cristaux d'une zéolithe de type structural AFX et/ou la durée totale de cristallisation. Lesdits germes cristallins favorisent également la formation de ladite zéolithe de type structural AFX au détriment d'impuretés. De tels germes comprennent des solides cristallisés, notamment des cristaux d'une zéolithe de type structural AFX. Les germes cristallins sont généralement ajoutés dans une proportion comprise entre 0,01 et 10% de la masse totale des sources desdits éléments tétravalent, silicium, et trivalent, aluminium, sous forme oxyde utilisées dans le mélange réactionnel, lesdits germes cristallins n'étant pas pris en compte dans la masse totale des sources des éléments tétravalents et trivalents. Lesdits germes ne sont pas non plus pris en compte pour déterminer la composition du mélange réactionnel et/ou du gel, définie plus avant, c'est-à-dire dans la détermination des différents rapports molaires de la composition du mélange réactionnel.

L'étape i) de mélange est mise en œuvre jusqu'à obtention d'un mélange homogène, de préférence pendant une durée supérieure ou égale à 10 minutes, de préférence sous agitation par tout système connu de l'homme du métier à faible ou fort taux de cisaillement.

A l'issue de l'étape i) on obtient un gel précurseur homogène.

Il peut être avantageux de mettre en œuvre un mûrissement du mélange réactionnel avant la cristallisation hydrothermale au cours de ladite étape i) du procédé de l'invention afin de contrôler la taille des cristaux d'une zéolithe de type structural AFX. Ledit mûrissement favorise également la formation de ladite zéolithe de type structural AFX au détriment d'impuretés. Le mûrissement du mélange réactionnel au cours de ladite étape i) du procédé de l'invention peut être réalisé à température ambiante ou à une température comprise entre 20 et 80°C avec ou sans agitation, pendant une durée avantageusement comprise entre 30 minutes et 24 heures.

**Etape ii) de traitement hydrothermal**

Conformément à l'étape ii) du procédé selon l'invention, le gel précurseur obtenu à l'issue de l'étape i) est soumis à un traitement hydrothermal, préférentiellement réalisé à une température comprise entre 120°C et 250°C pendant une durée comprise entre 2 et 12 heures, jusqu'à ce que ladite zéolithe de type structural AFX (ou « solide cristallisé ») se forme.

Le gel précurseur est avantageusement mis sous conditions hydrothermales sous une pression de réaction autogène, éventuellement en ajoutant du gaz, par exemple de l'azote, à une température de préférence comprise entre 120°C et 250°C, de préférence entre 150°C et 230°C, jusqu'à la cristallisation complète d'une zéolithe de type structural AFX.

La durée nécessaire pour obtenir la cristallisation varie entre 2 et 12 heures, de préférence entre 2 et 10 heures, et de manière plus préférée entre 2 et 8 heures.

La mise en réaction s'effectue généralement sous agitation ou en absence d'agitation, de préférence sous agitation. Comme système d'agitation on peut utiliser tout système connu par l'homme de métier, par exemple, des pales inclinées avec des contrepales, des turbines d'agitation, des vis d'Archimède.

**Etape iii) d'échange**

Le procédé de préparation du catalyseur selon l'invention comprend au moins une étape d'échange ionique, comprenant la mise en contact du solide cristallisé obtenu à l'issue de l'étape précédente, c'est-à-dire de la zéolithe AFX obtenue à l'issue de l'étape ii) ou de la zéolithe AFX séchée et calcinée obtenue à l'issue de l'étape iv) dans le cas préféré où les étapes iii) et iv) sont interverties, avec au moins une solution comprenant au moins une espèce apte à libérer un métal de transition, de préférence le cuivre, en solution sous forme réactive, sous agitation à température ambiante pendant une durée comprise entre 1 heure et 2 jours, avantageusement pendant une durée comprise entre 6 et 12 heures, , le métal de transition étant le cuivre et/ou le fer et la teneur en métal(aux) de transition introduit(s) par l'étape d'échange ionique iii) étant comprise entre 0,5 à 6% massique, de préférence entre 0,5 et 5% massique, de manière plus préférée entre 1 et 4% massique par rapport à la masse totale du catalyseur final anhydre, la concentration en ladite espèce apte à libérer le métal de transition dans ladite solution étant fonction de la quantité de métal de transition que l'on souhaite incorporer audit solide cristallisé.

Il est également avantageux d'obtenir la forme protonée de la zéolithe de type structural AFX après l'étape ii). Ladite forme hydrogène peut être obtenue en effectuant un échange d'ions avec un acide, en particulier un acide minéral fort comme l'acide chlorhydrique, sulfurique ou nitrique, ou avec un composé tel que le chlorure, le sulfate ou le nitrate d'ammonium, avant l'échange ionique avec le ou les métaux de transition.

Le métal de transition libéré dans la solution d'échange est sélectionné dans le groupe formé des éléments suivants Fe, Cu, de préférence Cu.

Selon l'invention, par « espèce apte à libérer un métal de transition », on entend une espèce apte à se dissocier en milieu aqueux, comme par exemple les sulfates, les nitrates, les chlorures, les oxalates, les complexes organométalliques d'un métal de transition ou leurs mélanges. De préférence, l'espèce apte à libérer un métal de transition est un sulfate ou un nitrate dudit métal de transition.

Selon l'invention, la solution avec laquelle le solide cristallisé ou le solide cristallisé séché et calciné est mis en contact, comprend au moins une espèce apte à libérer un métal de transition, de préférence une seule espèce apte à libérer un métal de transition, de préférence le fer ou cuivre, préférentiellement le cuivre.

Avantageusement, le procédé de préparation du catalyseur selon l'invention comprend une étape iii) d'échanges ioniques par mise en contact du solide cristallisé avec une solution comprenant une espèce apte à libérer un métal de transition ou par mise en contact successive du solide avec plusieurs solutions comprenant chacune une espèce apte à libérer un métal de transition, les différentes solutions comprenant des espèces aptes à libérer un métal de transition différentes.

A la fin de l'échange, le solide obtenu est avantageusement filtré, lavé et ensuite séché pour obtenir ledit catalyseur sous forme de poudre.

La quantité totale de métal de transition, de préférence le cuivre, contenue dans ledit catalyseur final est comprise entre 0,5 et 6% massique par rapport à la masse totale du catalyseur sous sa forme anhydre.

Le catalyseur est préparé par un procédé comprenant une étape iii) d'échange ionique, le solide ou le solide séché et calciné étant mis en contact avec une solution comprenant une espèce apte à libérer du cuivre en solution sous forme réactive. De manière avantageuse, la quantité de cuivre totale contenue dans ledit catalyseur final, c'est-à-dire à l'issue du procédé de préparation, est comprise entre 0,5 et 6%, de préférence entre 1 et 4% massique, tous les pourcentages étant des pourcentages massiques par rapport à la masse totale du catalyseur final sous sa forme anhydre, obtenu à l'issue du procédé de préparation.

**Etape iv) de traitement thermique**

Le procédé de préparation selon l'invention comprend une étape iv) de traitement thermique réalisée à l'issue de l'étape précédente, c'est-à-dire à l'issue de l'étape ii) de traitement hydrothermal ou à l'issue de l'étape iii) d'échange ionique, de préférence à l'issue de l'étape iii) d'échange ionique. L'étape iii) du procédé de préparation peut avantageusement être intervertie avec l'étape iv). Chacune des deux étapes iii) et iv) peut également éventuellement être répétée.

Ladite étape iv) de traitement thermique comprend un séchage du solide à une température comprise entre 20 et 150°C, de préférence entre 60 et 100°C, avantageusement pendant une durée compris entre 2 et 24 heures, suivi d'au moins une calcination, sous air, éventuellement sec, à une température avantageusement comprise entre 450 et 700°C, de préférence entre 500 et 600°C pendant une durée comprise entre 2 et 20 heures, de préférence entre 6 et 16 heures, de manière plus préférée entre 8 et 13 heures, le débit d'air éventuellement sec étant de manière préférée compris entre 0,5 et 1,5 L/h/g de solide à traiter, de manière plus préférée compris entre 0,7 et 1,2 L/h/g de solide à traiter. La calcination peut être précédée d'une montée en température progressive.

Le catalyseur obtenu à l'issue de l'étape iv) de traitement thermique est dépourvu de toute espèce organique, en particulier dépourvu du structurant organique R.

En particulier, le catalyseur obtenu par un procédé comprenant au moins les étapes i), ii), iii), et iv) précédemment décrites présente des propriétés améliorées pour la conversion des $NO_x$

## Caractérisation du catalyseur

Le catalyseur comprend une zéolithe de structure AFX selon la classification de l'International Zeolite Association (IZA), échangée par au moins un métal de transition. Cette structure est caractérisée par diffraction aux rayons X (DRX).

Le diagramme de diffraction aux rayons X (DRX) est obtenu par analyse radiocristallographique au moyen d'un diffractomètre en utilisant la méthode classique des poudres avec le rayonnement $K\alpha_1$ du cuivre ($\lambda$ = 1,5406Å). A partir de la position des pics de diffraction représentée par l'angle $2\theta$, on calcule, par la relation de Bragg, les équidistances réticulaires $d_{hkl}$ caractéristiques de l'échantillon. L'erreur de mesure $\Delta(d_{hkl})$ sur $d_{hkl}$ est calculée grâce à la relation de Bragg en fonction de l'erreur absolue $\Delta(2\theta)$ affectée à la mesure de $2\theta$. Une erreur absolue $\Delta(2\theta)$ égale à $\pm$ 0,02° est communément admise. L'intensité relative $I_{rel}$ affectée à chaque valeur de $d_{hkl}$ est mesurée d'après la hauteur du pic de diffraction correspondant. La comparaison du diffractogramme avec les fiches de la base de données d'ICDD (International Centre for Diffraction Data) en utilisant un logiciel comme par exemple le DIFFRACT.SUITE nous permet aussi de faire l'identification des phases cristallines présentes dans le matériau obtenu.

L'analyse qualitative et quantitative des espèces chimiques présentes dans les matériaux obtenus est faite par spectrométrie de fluorescence des rayons X (FX). Celle-ci est une technique d'analyse chimique utilisant une propriété physique de la matière, la fluorescence de rayons X. Le spectre des rayons X émis par la matière est caractéristique de la composition de l'échantillon, en analysant ce spectre, on peut en déduire la composition élémentaire, c'est-à-dire les concentrations massiques en éléments.

La perte au feu (PAF) du catalyseur obtenu après l'étape de séchage (et avant calcination) ou après l'étape de calcination de l'étape iv) du procédé est généralement comprise entre 5 et 18% poids. La perte au feu d'un échantillon, désignée sous l'acronyme PAF, correspond à la différence de masse de l'échantillon avant et après un traitement thermique à 1000°C pendant 2 heures. Elle est exprimée en % correspondant au pourcentage de perte de masse. La perte au feu correspond en général à la perte de solvant (comme l'eau) contenu dans le solide mais aussi à l'élimination de composés organiques contenus dans les constituants solides minéraux.

## Procédé de réduction sélective de $NO_x$ par un réducteur tel que $NH_3$ ou $H_2$ mettant en œuvre le catalyseur
(non revendiqué)

La description concerne également l'utilisation du catalyseur, directement préparé ou susceptible d'être préparé par le procédé décrit précédemment pour la réduction sélective de $NO_x$ par un réducteur tel que $NH_3$ ou $H_2$, avantageusement mis en forme par dépôt sous forme de revêtement (« washcoat » selon la terminologie anglosaxonne) sur une structure nid d'abeilles principalement pour les applications mobiles ou une structure à plaques que l'on retrouve particulièrement pour les applications stationnaires.

La structure nid d'abeilles est formée de canaux parallèles ouverts aux deux extrémités (flow-through en anglais) ou comporte des parois poreuses filtrantes et dans ce cas les canaux parallèles adjacents sont alternativement bouchés de part et d'autre des canaux afin de forcer le flux de gaz à traverser la paroi (wall-flow monolith en anglais). Ladite structure nid d'abeilles ainsi revêtue constitue un pain catalytique. Ladite structure peut être composée de cordiérite, carbure de silicium (SiC), titanate d'aluminium (AlTi), alumine alpha, mullite ou tout autre matériau dont la porosité est comprise entre 30 et 70%. Ladite structure peut être réalisée en tôle métallique, en acier inoxydable contenant du Chrome et de l'aluminium, acier de type FeCrAl.

La quantité de catalyseur déposé sur ladite structure est comprise entre 50 à 180 g/L pour les structures filtrantes et entre 80 et 200 g/L pour les structures avec canaux ouverts.

Le revêtement proprement dit (« washcoat ») comprend le catalyseur, avantageusement associé à un liant tel que la cérine, l'oxyde de zirconium, l'alumine, la silice-alumine non zéolithique, l'oxyde de titane, un oxyde mixte de type cerinezircone, un oxyde de tungstène, une spinelle. Ledit revêtement est avantageusement appliqué à ladite structure par une méthode de dépôt (washcoating en anglais) qui consiste à tremper le monolithe dans une suspension (slurry en anglais) de poudre de catalyseur dans un solvant, de préférence de l'eau, et potentiellement des liants, oxydes métalliques, stabilisateurs ou autres promoteurs. Cette étape de trempe peut être répétée jusqu'à atteindre la quantité souhaitée de revêtement. Dans certains cas le slurry peut aussi être pulvérisé au sein du monolithe. Le revêtement une fois déposé, le monolithe est calciné à une température de 300 à 600°C pendant 1 à 10 heures.

Ladite structure peut être revêtue d'un ou plusieurs revêtements. Le revêtement comprenant le catalyseur est avantageusement associé à, c'est-à-dire recouvre un ou est recouvert par, un autre revêtement présentant des capacités d'adsorption de polluants en particulier de NOx, de réduction de polluants en particulier des NOx ou favorisant l'oxydation de polluants, en particulier celle de l'ammoniac.

Une autre possibilité est de mettre le catalyseur sous forme d'extrudé. Dans ce cas, la structure obtenue peut contenir jusqu'à 100% de catalyseur.

Ladite structure revêtue par le catalyseur est avantageusement intégrée dans une ligne d'échappement d'un moteur à combustion interne fonctionnant principalement en mélange pauvre, c'est-à-dire en excès d'air par rapport à la stœchiométrie de la réaction de combustion comme c'est le cas pour les moteurs Diesel par exemple. Dans ces conditions de fonctionnement du moteur, les gaz d'échappement contiennent notamment les polluants suivants : des suies, des hydrocarbures imbrûlés (HC), du monoxyde de carbone (CO), des oxydes d'azotes (NOx). En amont de ladite structure revêtue du catalyseur peut être placé un catalyseur d'oxydation dont la fonction est d'oxyder les HC et le CO ainsi qu'un filtre pour éliminer les suies des gaz d'échappement, la fonction de ladite structure revêtue étant d'éliminer le NOx, sa gamme de fonctionnement de se situant entre 100 et 900°C et de manière préférée entre 200°C et 500°C.

## Avantages de l'invention

Le catalyseur, à base d'une zéolithe de type structural AFX obtenue par synthèse rapide et d'au moins un métal de transition, en particulier du cuivre, présente des propriétés améliorées par rapport aux catalyseurs de l'art antérieur. En particulier, l'utilisation du catalyseur permet d'obtenir des températures d'amorçage plus faibles pour la réaction de conversion des NOx et une meilleure conversion des $NO_x$ sur l'ensemble de la gamme de température de fonctionnement (150 - 600°C), tout en conservant une bonne sélectivité en $N_2O$. Il présente aussi une meilleure tenue en vieillissement hydrothermal, garantissant des performances élevées même après ce vieillissement.

## EXEMPLES

**Exemple 1:** *préparation du dihydroxyde de 1,6-bis(méthylpiperidinium)hexane (structurant R).*

50 g de 1,6-dibromohexane (0,20 mole, 99%, Alfa Aesar) sont ajoutés dans un ballon de 1 L contenant 50 g de N-méthylpipéridine (0,51 mole, 99%, Alfa Aesar) et 200 mL d'éthanol. Le milieu réactionnel est agité et porté à reflux pendant 5 heures. Le mélange est ensuite refroidi à température ambiante, puis filtré. Le mélange est versé dans 300 mL de diéthyléther froid, puis le précipité formé est filtré et lavé avec 100 mL de diéthyléther. Le solide obtenu est recristallisé dans un mélange éthanol/éther. Le solide obtenu est séché sous vide pendant 12 heures. On obtient 71 g d'un solide blanc (soit un rendement de 80%).

Le produit possède le spectre RMN $^1$H attendu. RMN $^1$H ($D_2O$, ppm/TMS) : 1,27 (4H,m) ; 1,48 (4H,m) ; 1,61 (4H,m) ; 1,70 (8H,m) ; 2,85 (6H,s) ; 3,16 (12H,m).

18,9 g d'$Ag_2O$ (0,08 mole, 99%, Aldrich) sont ajoutés dans un bécher en téflon de 250 mL contenant 30 g du structurant dibromure de 1,6-bis(méthylpiperidinium)hexane (0,07 mole) préparé et 100 mL d'eau déionisée. Le milieu réactionnel est agité à l'abri de la lumière pendant 12 heures. Le mélange est ensuite filtré. Le filtrat obtenu est composé d'une solution aqueuse de dihydroxyde de 1,6-bis(méthylpiperidinium)hexane. Le dosage de cette espèce est réalisé par RMN du proton en utilisant l'acide formique en tant qu'étalon.

**Exemple** 2: *préparation d'une zéolithe de type structural AFX selon l'invention avec 3% Cu*

*Préparation de la zéolithe AFX*

467,1 g d'une solution aqueuse de dihydroxyde de 1,6-bis(méthylpiperidinium)hexane (18,36% en poids) préparé selon l'exemple 1 ont été mélangés avec 4,3 g d'eau déionisée. 19,72 g d'hydroxyde de sodium (solide, pureté 98% en poids, Aldrich) sont ajoutés au mélange précédent, la préparation obtenue est maintenue sous agitation pendant 10 minutes. Par la suite, 15,56 g d'aluminate de sodium (53,17% $Al_2O_3$, Strem Chemicals) sont incorporés et le gel de synthèse est maintenu sous agitation pendant 15 minutes. Au final, 243,38 g de silice colloïdale (Ludox HS40, 40% $SiO_2$ en poids, Grace) et 9,76 g de germes d'une zéolithe AFX obtenue par une méthode connue de l'homme du métier ont été incorporés sous agitation dans le mélange de synthèse. La composition molaire du mélange sans prendre en compte les germes de zéolithe AFX est la suivante: 100 $SiO_2$: 5 $Al_2O_3$: 16,7 R: 22,4 $Na_2O$: 1836 $H_2O$, soit un ratio $SiO_2/Al_2O_3$ de 20. Le gel précurseur est ensuite transféré, après homogénéisation, dans un autoclave. L'autoclave est fermé puis chauffé avec une montée de 5°C/min en température jusqu'à 150°C pendant 4 heures sous pression autogène et sous agitation à 200 tr/min avec un système à 4 pales inclinées. Le produit cristallisé obtenu est filtré, lavé à l'eau déionisée puis séché une nuit à 100°C. La perte au feu est de 14%. Le solide est ensuite introduit dans un four à moufle où est réalisée une étape de calcination: le cycle de calcination comprend une montée de 1,5°C/min en température jusqu'à 200°C, un palier à 200°C maintenu durant 2 heures, une montée de 1°C/min en température jusqu'à 550°C suivi d'un palier à 550°C maintenu durant 12 heures puis un retour à la température ambiante.

Le produit solide calciné a été analysé par diffraction des rayons X et identifié comme étant constitué d'une zéolithe de type structural AFX (fiche ICDD, PDF 04-011-1869) de pureté supérieure à 99,8%. Le produit présente un rapport molaire $SiO_2/Al_2O_3$ de 10,2 tel que déterminé par FX.

La zéolithe AFX calcinée est ensuite mise en contact avec une solution de $NH_4NO_3$ 3 molaire pendant 1 heure sous agitation à 80°C. Le rapport entre le volume de solution de $NH_4NO_3$ et la masse de solide est de 10. Le solide obtenu est filtre et lavé et la procédure d'échange est répété encore deux fois dans les mêmes conditions. Le solide final est séparé, lavé et séché pendant 12 heures à 100°C. Une analyse DRX montre que le produit obtenu est une zéolithe de type structural AFX pure.

La zéolithe AFX sous forme ammoniacale est traitée sous flux d'air à 550°C pendant 8 heures avec une rampe de montée en température de 1°C/min. Le produit obtenu est une zéolithe AFX sous forme protonée.

*Echange ionique au Cu*

La zéolithe AFX calcinée sous forme protonée est mise en contact avec une solution de $[Cu(NH_3)_4](NO_3)_2$ pendant 12 heures sous agitation à température ambiante. Le solide final est séparé, lavé et séché pendant 12 heures à une température de 100°C.

Le solide échangé Cu-AFX obtenu après la mise en contact avec la solution de $[Cu(NH_3)_4](NO_3)_2$ est calciné sous flux d'air à 550°C durant 8 heures.

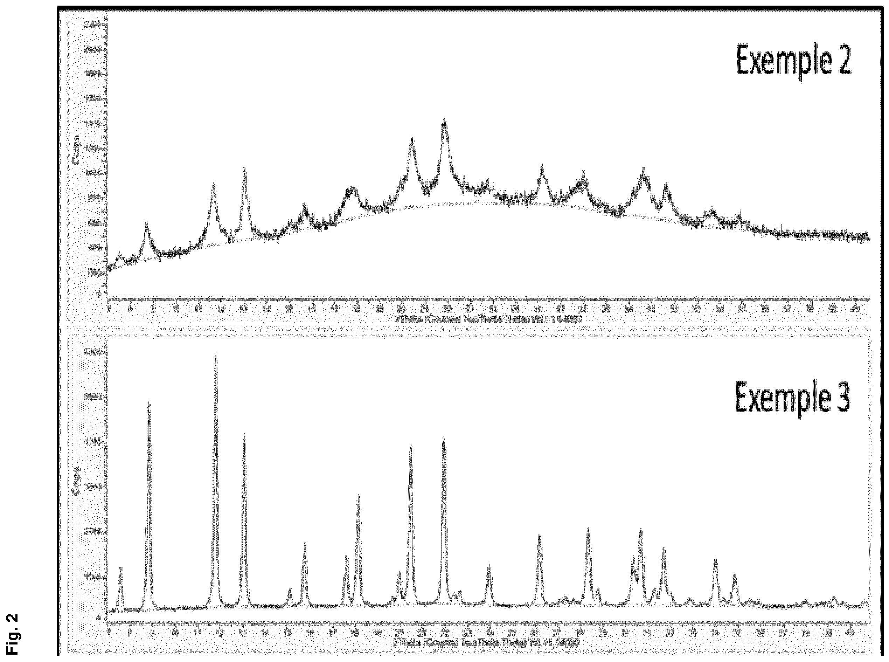

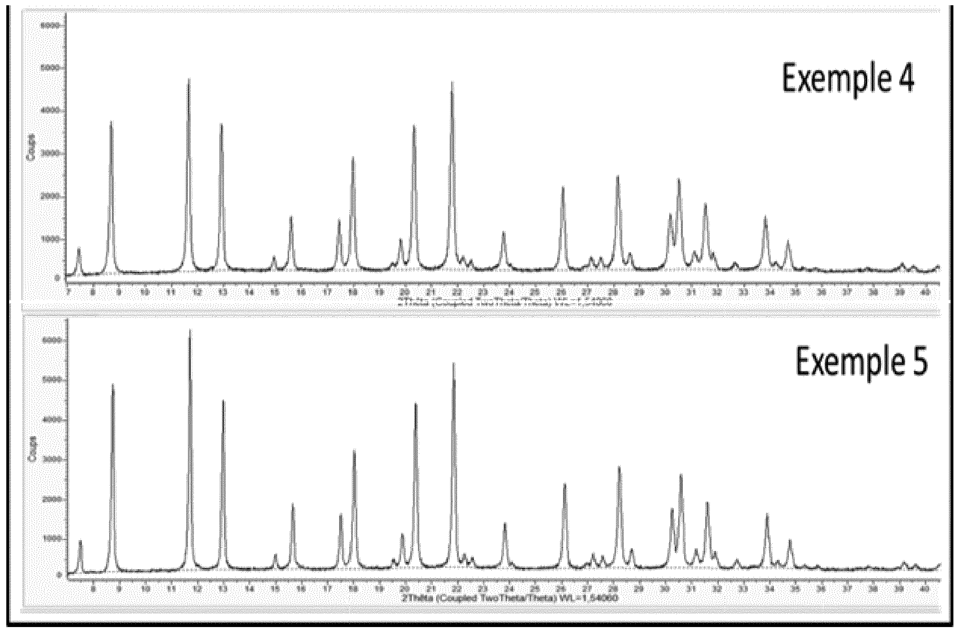

Le produit solide calciné est analysé par diffraction des rayons X et identifié comme une zéolithe de type structural AFX (fiche ICDD, PDF 04-011-1869). Le diagramme de diffraction effectué sur ce solide est donné sur la **Figure 2.**

Le produit présente un rapport molaire $SiO_2/Al_2O_3$ de 10,2 et un pourcentage massique de Cu de 3% tel que déterminé par FX.

Le catalyseur obtenu est noté CuAFX.

**Exemple 3:** *préparation d'une zéolithe de type structural AFX selon l'invention 3% Cu Préparation de la zéolithe AFX*

29,3 g d'une solution aqueuse de dihydroxyde de 1,6-bis(méthylpiperidinium)hexane (18,36% en poids) préparé selon l'exemple 1 sont mélangés avec 41,73 g d'eau permutée, sous agitation et à température ambiante. 0,764 g d'hydroxyde de sodium (98% en poids, Aldrich) sont dissous dans le mélange précédent sous agitation et à température ambiante. Par la suite, 0,675 g de gel amorphe d'hydroxyde d'aluminium ($Al(OH)_3$ gel amorphe, 58,55% en masse de $Al_2O_3$, Merck), sont incorporés dans le mélange de synthèse, celui-ci est le maintenu sous agitation pendant une demi-heure à température ambiante. Dès que la suspension obtenue est homogène on commence à verser 7,56 g d'une zéolithe de type structural FAU (CBV780, $SiO_2/Al_2O_3$ = 98,22, Zeolyst, PAF = 8,52%) et on maintient sous agitation la suspension obtenue pendant 30 minutes à température ambiante. Afin de favoriser la formation d'une zéolithe de type structural AFX, 0,614 g de germes (10% par rapport à la masse de zéolithe CBV780) d'une zéolithe de type structural AFX sont ajoutés dans le mélange de synthèse qui et maintenu sous agitation pendant 5 minutes. Ensuite, le mélange réactionnel subit une étape de mûrissement pendant 24 heures à température ambiante sous agitation (200 tr/min). La composition molaire du gel précurseur est la suivante: 1 $SiO_2$: 0,05 $Al_2O_3$: 0,167 R: 0,093 $Na_2O$: 36,73 $H_2O$, soit un ratio $SiO_2/Al_2O_3$ de 20. Le gel précurseur est ensuite transféré, dans un réacteur en inox de 160 mL doté d'un système d'agitation à quatre pales inclinées. Le réacteur est fermé, puis chauffé pendant 5 heures sous pression autogène avec une montée en température de 5°C/min jusqu'à 180°C sous agitation à 200 tr/min pour permettre la cristallisation de la zéolithe de type structural AFX. Le produit cristallisé obtenu est filtré, lavé à l'eau déionisée, puis séché une nuit à 100°C. La perte au feu du solide séché est de 14,69%.

Le solide est ensuite introduit dans un four à moufle où est réalisée une étape de calcination: le cycle de calcination comprend une montée en température de 1,5°C/min jusqu'à 200°C, un palier à 200°C maintenu durant 2 heures, une montée de 1°C/min jusqu'à 550°C suivi d'un palier à 550°C maintenu durant 12 heures puis un retour à la température ambiante.

Le produit solide calciné a été analysé par diffraction de rayons X et identifié comme étant constitué d'une zéolithe de type structural AFX(fiche ICDD, PDF 04-011-1869) avec une pureté supérieure à 99% poids. Le produit a un rapport molaire $SiO_2/Al_2O_3$ de 14,05 tel que déterminé par FX.

La zéolithe AFX calcinée est ensuite mise en contact d'une solution de $NH_4NO_3$ 3 molaire pendant 1 heure sous agitation à 80°C. Le rapport entre le volume de solution de $NH_4NO_3$ et la masse de solide est de 10. Le solide obtenu est filtre et lavé et la procédure d'échange est répété encore deux fois dans les mêmes conditions. Le solide final est séparé, lavé et séché pendant 12 heures à 100°C. Une analyse DRX montre que le produit obtenu est une zéolithe de type structural AFX pure.

La zéolithe AFX sous forme ammoniacale est traitée sous flux d'air à 550°C pendant 8 heures avec une rampe de montée en température de 1°C/min. Le produit obtenu est une zéolithe AFX sous forme protonée.

*Echange ionique au Cu*

La zéolithe AFX calcinée sous forme protonée est mise en contact avec une solution de $[Cu(NH_3)_4](NO_3)_2$ pendant 12 heures sous agitation à température ambiante. Le solide final est séparé, lavé et séché pendant 12 heures à une température de 100°C.

Le solide échangé Cu-AFX obtenu après la mise en contact avec la solution de $[Cu(NH_3)_4](NO_3)_2$ est calciné sous flux d'air à 550°C durant 8 heures.

Le produit solide calciné est analysé par diffraction des rayons X et identifié comme une zéolithe de type structural AFX (fiche ICDD, PDF 04-011-1869). Le diagramme de diffraction effectué sur ce solide est donné sur la **Figure 2.**

Le produit présente un rapport molaire $SiO_2/Al_2O_3$ de 14,05 et un pourcentage massique de Cu de 3% tel que déterminé par FX.

Le catalyseur obtenu est noté CuAFX780.

**Exemple 4:** *préparation d'une zéolithe de type structural AFX selon l'invention 3% Cu*

*Préparation de la zéolithe AFX*

33,37 g d'une solution aqueuse de dihydroxyde de 1,6-bis(méthylpiperidinium)hexane (18,36% en poids) préparé selon l'exemple 1 sont mélangés avec 37,15 g d'eau permutée, sous agitation et à température ambiante. 1,72 g d'hydroxyde de sodium (98% en poids, Aldrich) sont dissous dans le mélange précédent sous agitation et à température ambiante. Dès que la suspension obtenue est homogène on commence à verser 7,79 g d'une zéolithe de type structural FAU (CBV720, $SiO_2/Al_2O_3$ = 33,52, Zeolyst, PAF = 6,63%) et on maintient sous agitation la suspension obtenue pendant 30 minutes à température ambiante. Afin de favoriser la formation d'une zéolithe de type structural AFX, 0,646 g de germes (10% par rapport à la masse de zéolithe CBV720) d'une zéolithe de type structural AFX sont ajoutés dans le mélange de synthèse et maintenu sous agitation pendant 5 minutes. Ensuite, le mélange réactionnel subit une étape de mûrissement pendant 24 heures à température ambiante sous agitation (200 tr/min). La composition molaire du gel précurseur est la suivante: 1 $SiO_2$: 0,0298 $Al_2O_3$: 0,18 R: 0,20 $Na_2O$: 34 $H_2O$, soit un ratio $SiO_2/Al_2O_3$ de 33,55. Le gel précurseur est ensuite transféré, après homogénéisation, dans un réacteur en inox de 160 mL doté d'un système d'agitation à quatre pales inclinées. Le réacteur est fermé, puis chauffé pendant 5 heures sous pression autogène avec une montée en température de 5°C/min jusqu'à 180°C sous agitation à 200 tr/min pour permettre la cristallisation de la zéolithe de type structural AFX. Le produit cristallisé obtenu est filtré, lavé à l'eau déionisée, puis séché une nuit à 100°C. La perte au feu du solide séché est de 14,82%. Le solide est ensuite introduit dans un four à moufle où est réalisée une étape de calcination: le cycle de calcination comprend une montée en température de 1,5°C/min jusqu'à 200°C, un palier à 200°C maintenu durant 2 heures, une montée de 1°C/min jusqu'à 550°C suivi d'un palier à 550°C maintenu durant 12 heures puis un retour à la température ambiante.

Le produit solide calciné a été analysé par diffraction de rayons X et identifié comme étant constitué d'une zéolithe de type structural AFX(fiche ICDD, PDF 04-011-1869) avec une pureté supérieure à 99% poids. Le produit a un rapport molaire $SiO_2/Al_2O_3$ de 11,42 tel que déterminé par FX.

La zéolithe AFX calcinée est ensuite mise en contact d'une solution de $NH_4NO_3$ 3 molaire pendant 1 heure sous agitation à 80°C. Le rapport entre le volume de solution de $NH_4NO_3$ et la masse de solide est de 10. Le solide obtenu est filtre et lavé et la procédure d'échange est répété encore deux fois dans les mêmes conditions. Le solide final est séparé, lavé et séché pendant 12 heures à 100°C. Une analyse DRX montre que le produit obtenu est une zéolithe de type structural AFX pure.

La zéolithe AFX sous forme ammoniacale est traitée sous flux d'air à 550°C pendant 8 heures avec une rampe de montée en température de 1°C/min. Le produit obtenu est une zéolithe AFX sous forme protonée.

*Echange ionique au Cu*

La zéolithe AFX calcinée sous forme protonée est mise en contact avec une solution de $[Cu(NH_3)_4](NO_3)_2$ pendant 12 heures sous agitation à température ambiante. Le solide final est séparé, lavé et séché pendant 12 heures à une température de 100°C.

Le solide échangé Cu-AFX obtenu après la mise en contact avec la solution de $[Cu(NH_3)_4](NO_3)_2$ est calciné sous flux d'air à 550°C durant 8 heures.

Le produit solide calciné est analysé par diffraction des rayons X et identifié comme une zéolithe de type structural AFX (fiche ICDD, PDF 04-011-1869). Le diagramme de diffraction effectué sur ce solide est donné sur la **Figure 2.**

Le produit présente un rapport molaire $SiO_2/Al_2O_3$ de 11,42 et un pourcentage massique de Cu de 3% tel que déterminé par FX.

Le catalyseur obtenu est noté CuAFX720.

**Exemple** 5: *préparation d'une zéolithe de type structural AFX selon l'invention 3% Cu*

*Préparation de la zéolithe AFX*

28,35 g d'une solution aqueuse de dihydroxyde de 1,6-bis(méthylpiperidinium)hexane (18,36% en poids) préparé selon l'exemple 1 sont mélangés avec 41,22 g d'eau permutée, sous agitation et à température ambiante. 1,26 g d'hydroxyde de sodium (98% en poids, Aldrich) sont dissous dans le mélange précédent sous agitation et à température ambiante. On verse ensuite par petites fractions 5,74 g de silice Aerosil 380 (100% en poids, Degussa) sous agitation. Dès que la suspension obtenue est homogène on commence à verser 3,43 g de zéolithe de type structural FAU (CBV600 Zeolyst, $SiO_2/Al_2O_3$= 5,48, PAF = 12,65%) et on maintien sous agitation la suspension obtenue pendant 30 minutes, à température ambiante. Ensuite, le mélange réactionnel subit une étape de mûrissement pendant 2 heures à température ambiante sous agitation (350 tr/min). Le gel précurseur obtenu présente la composition molaire suivante: 1 $SiO_2$: 0,05 $Al_2O_3$: 0,125 R : 0,12 $Na_2O$: 27,55 $H_2O$, soit un ratio $SiO_2/Al_2O_3$ de 20. Dans le gel précurseur sont introduits sous agitation 0,79 g de germes de zéolithe de type structural AFX (8,7% par rapport à la masse de zéolithe CBV600 anhydre et de silice Aerosil 380). Ensuite le gel précurseur contenant les germes de zéolithe AFX est transféré dans un réacteur inox de 160 mL doté d'un système d'agitation à 4 pales inclinées. Le réacteur est fermé, puis chauffé pendant 7 heures sous pression autogène avec une montée en température de 5°C/min jusqu'à 190°C sous agitation à 200 tr/min pour permettre la cristallisation de la zeolithe de type structural AFX. Le solide obtenu est filtré, lavé à l'eau déionisée puis séché une nuit à 100°C. La perte au feu du solide séché est de 12,6%.

Le solide est ensuite introduit dans un four à moufle où est réalisée une étape de calcination: le cycle de calcination comprend une montée en température de 1,5°C/min jusqu'à 200°C, un palier à 200°C maintenu durant 2 heures, une montée de 1°C/min jusqu'à 580°C suivi d'un palier à 580°C maintenu durant 10 heures puis un retour à la température ambiante.

Le produit solide calciné a été analysé par diffraction des rayons X et identifié comme étant constitué d'une zéolithe de type structural AFX(fiche ICDD, PDF 04-011-1869) de pureté supérieure à 97% poids. Le produit a un rapport molaire $SiO_2/Al_2O_3$ de 11,2 tel que déterminé par FX.

La zéolithe AFX calcinée est ensuite mise en contact d'une solution de $NH_4NO_3$ 3 molaire pendant 1 heure sous agitation à 80°C. Le rapport entre le volume de solution de $NH_4NO_3$ et la masse de solide est de 10. Le solide obtenu est filtre et lavé et la procédure d'échange est répété encore deux fois dans les mêmes conditions. Le solide final est séparé, lavé et séché pendant 12 heures à 100°C. Une analyse DRX montre que le produit obtenu est une zéolithe de type structural AFX pure.

La zéolithe AFX sous forme ammoniacale est traitée sous flux d'air à 550°C pendant 8 heures avec une rampe de montée en température de 1°C/min. Le produit obtenu est une zéolithe AFX sous forme protonée.

*Echange ionique au Cu*

La zéolithe AFX calcinée sous forme protonée est mise en contact avec une solution de $[Cu(NH_3)_4](NO_3)_2$ pendant 12 heures sous agitation à température ambiante. Le solide final est séparé, lavé et séché pendant 12 heures à une température de 100°C.

Le solide échangé Cu-AFX obtenu après la mise en contact avec la solution de $[Cu(NH_3)_4](NO_3)_2$ est calciné sous flux d'air à 550°C durant 8 heures.

Le produit solide calciné est analysé par diffraction des rayons X et identifié comme une zéolithe de type structural AFX (fiche ICDD, PDF 04-011-1869). Le diagramme de diffraction effectué sur ce solide est donné sur la **Figure 2.**

Le produit présente un rapport molaire $SiO_2/Al_2O_3$ de 11,2 et un pourcentage massique de Cu de 3% tel que déterminé par FX.

Le catalyseur obtenu est noté CuAFX600.

**Exemple 6**

*Dans cet exemple, une zéolithe SSZ-16 échangée au Cu est synthétisée selon l'art antérieur. Dans cet exemple,*

*le cuivre est introduit par échange ionique.*

*Préparation de la zéolithe SSZ-16*

17,32 g d'hydroxyde de sodium sont dissous dans 582,30 g d'eau déionisée, sous agitation (300 tr/min) et à température ambiante. On rajoute dans cette solution 197,10 g de silicate de sodium et on homogénéise l'ensemble sous agitation (300 tr/min à température ambiante. On rajoute ensuite 9,95 g de zéolithe NaY CBV100 sous agitation (300 tr/min) et on poursuit ainsi jusqu'à dissolution de la zéolithe. On dissout dans la solution obtenue, 43,67 g du structurant DABCO-C4 et on homogénéise ainsi sous agitation (450 tr/min) pendant 30 minutes, à température ambiante.

Le mélange réactionnel présente la composition molaire suivante : 100 $SiO_2$ : 1,67 $Al_2O_3$ : 50 $Na_2O$: 10 DABCO-C4: 4000 $H_2O$
Le mélange réactionnel obtenu à l'étape de mélange est maintenu à température ambiante sous agitation pendant 24 heures.

Le gel obtenu est introduit dans un réacteur et chauffée à une température de 150°C pendant 6 jours sous agitation (200 tr/min). Les cristaux obtenus sont séparés et lavés avec de l'eau permutée jusqu'à obtention d'un pH des eaux de lavage inférieur à 8. Le solide cristallisé lavé est séché pendant 12 heures à 100°C. La perte au feu (PAF) est de 18% poids.

Une analyse DRX montre que le produit obtenu est une zéolithe SSZ-16 de type structural AFX brute de synthèse et pure (fiche ICDD, PDF 04-011-1869).

La zéolithe SSZ-16 brute de synthèse est calcinée sous flux d'air sec à 550°C durant 12 heures. La zéolithe SSZ-16 calcinée est mise en contact d'une solution de $NH_4NO_3$ 3 molaire pendant 5 heures sous agitation à température ambiante. Le rapport entre le volume de solution de $NH_4NO_3$ et la masse de solide est de 10. Le solide obtenu est filtre et lavé et la procédure d'échange est répété encore une fois dans les mêmes conditions. Le solide final est séparé, lavé et séché 12 heures à 100°C.

La zéolithe SSZ-16 sous forme ammoniacale ($NH_4$-SSZ-16) est traitée sous flux d'air sec à 550°C pendant 8 heures avec une rampe de montée en température de 1°C/min. Le produit obtenu est une zéolithe SSZ-16 sous forme protonée (H-SSZ-16).

*Echange ionique au Cu sur la H-SSZ-16*

La zéolithe H-SSZ-16 est mise en contact d'une solution de $[Cu(NH_3)_4](NO_3)_2$ pendant 12 heures sous agitation à température ambiante. Le solide final est séparé, lavé et séché et calciné sous flux d'air sec à 550°C durant 8 heures. Une analyse DRX montre que le produit obtenu est une zéolithe SSZ-16 de type structural AFX pure (fiche ICDD, PDF 04-011-1869).

L'analyse chimique par fluorescence des rayons X (FX) donne un rapport molaire $SiO_2/Al_2O_3$ de 13 et un pourcentage massique de Cu de 3%.

Le catalyseur obtenu est noté CuSSZ16.

**Exemple** 7 : *Conversion des NOx en Standard SCR : comparaison des catalyseurs selon l'invention avec l'art antérieur*

Un test catalytique de réduction des oxydes d'azote (NOx) par l'ammoniac ($NH_3$) en présence d'oxygène ($O_2$) dans des conditions Standard SCR est réalisé à différentes températures de fonctionnement pour les catalyseurs suivant l'exemple 2 (CuAFX, selon l'invention), l'exemple 3 (CuAFX780, selon l'invention), l'exemple 4 (CuAFX720, selon l'invention), l'exemple 5 (CuAFX600, selon l'invention) et le catalyseur suivant l'exemple 6 (CuSSZ16, comparatif).

Pour le test de chaque échantillon, 200 mg de catalyseur sous forme de poudre sont disposés dans un réacteur en quartz. 145 L/h d'une charge représentative d'un mélange de gaz d'échappement d'un moteur Diesel sont alimentés dans le réacteur.

Cette charge présente la composition molaire suivante : 400 ppm NO, 400 ppm $NH_3$, 8,5% $O_2$, 9% $CO_2$, 10% $H_2O$, qpc $N_2$.

Un analyseur FTIR permet de mesurer la concentration des espèces NO, $NO_2$, $NH_3$, $N_2O$, CO, $CO_2$, $H_2O$, $O_2$ en sortie de réacteur. Les conversions de NOx calculées comme suivant :

$$\text{Conversion} = (\text{NOx entrée} - \text{NOx sortie}) / \text{NOx entrée}$$

Les résultats de conversion de NOx dans les conditions Standard SCR sont présentés sur la **Figure** 3, les courbes CuAFX, CuAFX780, CuAFX720, CuAFX600 et CuSSZ16 correspondant respectivement aux tests réalisés avec

**EP 3 956 059 B1**

les catalyseurs synthétisés suivant l'exemple 2 (CuAFX, catalyseur selon l'invention), l'exemple 3 (CuAFX780, catalyseur selon l'invention), l'exemple 4 (CuAFX720, catalyseur selon l'invention), l'exemple 5 (CuAFX600, catalyseur selon l'invention),et l'exemple 6 (CuSSZ16, catalyseur non conforme à l'invention). Il apparait que les catalyseurs selon l'invention permettent de convertir les NOx.

Les catalyseurs CuAFX, CuAFX780, CuAFX720 et CuAFX600 synthétisés selon l'invention donnent des performances supérieures au catalyseur synthétisé selon l'état de l'art CuSSZ16 en termes de conversion de NOx sur l'ensemble de la plage de température testée. Une conversion maximum de 100% est atteinte entre 259°C et 430°C pour le catalyseur selon l'invention CuAFX780 alors que le catalyseur CuSSZ16 synthétisé selon l'art antérieur atteint seulement 89% de conversion entre 340 et 400°C.

Les températures d'amorçage des catalyseurs sont données ci-dessous pour les conditions Standard-SCR :

Tableau 1

|  | T50 | T80 | T90 | T100 |
|---|---|---|---|---|
| CuAFX | 180°C | 212°C | 228°C | 310°C |
| CuAFX780 | 159°C | 190°C | 204°C | 259°C |
| CuAFX720 | 173°C | 202°C | 217°C | 272°C |
| CuAFX600 | 172°C | 203°C | 222°C | 283°C |
| CuSSZ16 | 190°C | 257°C | 350°C | - |

T50 correspond à la température à laquelle 50% des NOx du mélange gazeux sont convertis par le catalyseur. T80 correspond à la température à laquelle 80% des NOx du mélange gazeux sont convertis par le catalyseur. T90 correspond à la température à laquelle 90% des NOx du mélange gazeux sont convertis par le catalyseur. T100 correspond à la température à laquelle 100% des NOx du mélange gazeux sont convertis par le catalyseur.

Les catalyseurs CuAFX, CuAFX780, CuAFX720 et CuAFX600 synthétisés selon l'invention donnent des performances très supérieures au catalyseur CuSSZ16 synthétisé selon l'art antérieur en termes de températures d'amorçage et de conversion de NOx sur l'ensemble de la plage de températures testée en conditions Standard SCR. En effet, à même taux de conversion (50% ou 80%), les températures d'amorçage obtenues avec le catalyseur selon l'invention CuAFX sont plus faibles par rapport à celles obtenues avec le catalyseur CuSSZ16.

**Exemple 8 :** *Conversion des NOx en Fast SCR: comparaison des catalyseurs selon l'invention et comparatif*

Un test catalytique de réduction des oxydes d'azote (NOx) par l'ammoniac ($NH_3$) en présence d'oxygène ($O_2$) dans les conditions Fast SCR est réalisé à différentes températures de fonctionnement pour les catalyseur synthétisés suivant l'invention (exemples 2, 3, 4 et 5) et l'échantillon CuSSZ16 synthétisé selon l'art antérieur (exemple 6) 200 mg de catalyseur sous forme de poudre est disposé dans un réacteur en quartz. 218 l/h d'une charge représentative d'un mélange de gaz d'échappement d'un moteur Diesel sont alimentés dans le réacteur. Cette charge présente la composition molaire suivante : 200 ppm NO, 200 ppm $NO_2$, 400 ppm $NH_3$, 8,5% $O_2$, 9% $CO_2$, 10% $H_2O$, qpc $N_2$ pour les conditions Fast SCR.

Un analyseur FTIR permet de mesurer la concentration des espèces NO, $NO_2$, $NH_3$, $N_2O$, CO, $CO_2$, $H_2O$, $O_2$ en sortie de réacteur. Les conversions des NOx sont calculées comme suivant :

$$Conversion = (NOx\ entrée - NOx\ sortie)\ /\ NOx\ entrée$$

Les températures d'amorçage des catalyseurs sont données ci-dessous pour les conditions Fast-SCR :

**Tableau 2**

|  | T50 | T80 | T90 | T100 |
|---|---|---|---|---|
| CuAFX | 178°C | 210°C | 235°C | 290°C |
| CuAFX780 | 162°C | 192°C | 215°C | 270°C |
| CuAFX720 | 161°C | 190°C | 214°C | 267°C |
| CuAFX600 | 166°C | 200°C | 220°C | 273°C |

(suite)

|  | T50 | T80 | T90 | T100 |
|---|---|---|---|---|
| CuSSZ16 | 188°C | 233°C | 269°C | 402°C |

T50 correspond à la température à laquelle 50% des NOx du mélange gazeux sont convertis par le catalyseur. T80 correspond à la température à laquelle 80% des NOx du mélange gazeux sont convertis par le catalyseur. T90 correspond à la température à laquelle 90% des NOx du mélange gazeux sont convertis par le catalyseur. T100 correspond à la température à laquelle 100% des NOx du mélange gazeux sont convertis par le catalyseur.

Les catalyseurs CuAFX, CuAFX780, CuAFX720 et CuAFX600 synthétisés selon l'invention donne des performances supérieures au catalyseur CuSSZ16 synthétisé selon l'art antérieur en termes de températures d'amorçage et de conversion de NOx sur l'ensemble de la plage de températures testée en conditions Fast SCR. En effet, à même taux de conversion (50%, 80%, 90% ou 100%), les températures d'amorçage obtenues avec le catalyseur selon l'invention CuAFX sont plus faibles par rapport à celles obtenues avec le catalyseur Cu-SSZ-16.

De plus, les émissions de protoxyde ($N_2O$) d'azote, dans le cas du catalyseur CuAFX selon l'invention, restent faibles sur toute la plage de températures testée (<20ppm entre 150 et 550°C).

## Revendications

1. Procédé de préparation d'un catalyseur à base d'une zéolithe de type structural AFX et d'au moins un métal de transition comprenant au moins les étapes suivantes:

   i) le mélange en milieu aqueux, d'au moins une source d'au moins un oxyde de silicium $SiO_2$, d'au moins une source d'au moins un oxyde d'aluminium $Al_2O_3$, , d'un composé organique azoté R, également appelé structurant spécifique, le dihydroxyde de 1,6-bis(méthylpiperidinium)hexane, d'au moins un métal alcalin et/ou un métal alcalino-terreux M de valence n, n étant un entier supérieur ou égal à 1, le mélange réactionnel présentant la composition molaire suivante :

   $SiO_2/Al_2O_3$ compris entre 2 et 100, de préférence entre 12 et 40
   $H_2O/SiO_2$ compris entre 5 et 60, de préférence entre 10 et 40
   $R/SiO_2$ compris entre 0,05 à 0,50, de préférence entre 0,10 et 0,40
   $M_{2/n}O/SiO_2$ compris entre 0,05 à 0,40, de préférence entre 0,15 et 0,30,
   dans laquelle M est le sodium, l'étape i) étant conduite pendant une durée permettant l'obtention d'un mélange homogène appelé gel précurseur ;

   ii) le traitement hydrothermal dudit gel précurseur obtenu à l'issue de l'étape i) sous pression autogène à une température comprise entre 120°C et 250°C, de préférence entre 150°C et 230°C, pendant une durée comprise entre 2 et 12 heures, de préférence entre 2 et 10 heures jusqu'à ce que ladite zéolithe de type structural AFX se forme,
   iii) au moins un échange ionique comprenant la mise en contact dudit solide obtenu à l'issue de l'étape précédente, avec une solution comprenant au moins une espèce apte à libérer un métal de transition, en solution sous forme réactive sous agitation à température ambiante pendant une durée comprise entre 1 heure et 2 jours, le métal de transition étant le cuivre et/ou le fer et la teneur en métal(aux) de transition introduit(s) par l'étape d'échange ionique iii) étant comprise entre 0,5 à 6% massique, de préférence entre 0,5 et 5% massique, de manière plus préférée entre 1 et 4% massique par rapport à la masse totale du catalyseur final anhydre;
   iv) un traitement thermique comprenant avantageusement un séchage du solide obtenu à l'issue de l'étape (ii) ou (iii) précédente à une température comprise entre 20 et 150°C, de préférence entre 60 et 100°C, pendant une durée comprise entre 2 et 24 heures, suivi d'au moins une calcination, sous air, éventuellement sec, à une température comprise entre 450 et 700°C, de préférence entre 500 et 600°C pendant une durée comprise entre 2 et 20 heures, de préférence entre 6 et 16 heures, de manière plus préférée entre 8 et 13 heures, le débit d'air éventuellement sec étant de manière préférée compris entre 0,5 et 1,5 L/h/g de solide à traiter, de manière plus préférée compris entre 0,7 et 1,2 L/h/g de solide à traiter.

2. Procédé de préparation d'un catalyseur selon la revendication 1 dans lequel au moins une source d'au moins un oxyde de silicium $SiO_2$ et/ou au moins une source d'au moins un oxyde d'aluminium $Al_2O_3$ est au moins une zéolithe de type structural FAU ayant un ratio molaire $SiO_2/Al_2O_3$ compris entre 2,00 et 100.

**3.** Procédé selon l'une des revendications 1 ou 2 dans lequel les étapes iii) et iv) sont interverties, et/ou éventuellement répétées.

**4.** Procédé de préparation d'un catalyseur selon l'une des revendications 1 à 3 dans lequel on ajoute des germes cristallins d'une zéolithe de type structural AFX au mélange réactionnel de l'étape i), de préférence en quantité comprise entre 0,01 et 10% de la masse totale des sources desdits éléments tétravalent (Si) et trivalent (Al) sous leur forme oxyde ($SiO_2$ et $Al_2O_3$) utilisées dans le mélange réactionnel, lesdits germes cristallins n'étant pas pris en compte dans la masse totale des sources des éléments tétravalent et trivalent.

**5.** Procédé de préparation d'un catalyseur selon l'une des revendications précédentes dans lequel l'étape i) comprend une étape de mûrissement du mélange réactionnel à une température comprise entre 20 et 80°C, avec ou sans agitation, pendant une durée comprise entre 30 minutes et 24 heures.

**6.** Procédé de préparation d'un catalyseur selon l'une des revendications précédentes dans lequel l'étape iii) d'échange ionique est réalisée par mise en contact du solide avec une solution comprenant une seule espèce apte à libérer un métal de transition ou par mises en contact successives du solide avec différentes solutions comprenant chacune au moins une, de préférence une seule, espèce apte à libérer un métal de transition, de préférence les métaux de transition des différentes solutions étant différents entre eux.

**Patentansprüche**

**1.** Verfahren zur Herstellung eines Katalysators auf der Basis eines Zeoliths vom AFX-Strukturtyp und mindestens eines Übergangsmetalls, das mindestens die folgenden Schritte umfasst:

i) Mischen von mindestens einer Quelle von mindestens einem Siliciumoxid $SiO_2$, mindestens einer Quelle von mindestens einem Aluminiumoxid $Al_2O_3$, einer organischen Stickstoffverbindung R, die auch als spezifischer Strukturbildner bezeichnet wird, 1,6-Bis(methylpiperidinium)hexandihydroxid, mindestens einem Alkalimetall und/oder einem Erdalkalimetall M mit der Wertigkeit n, wobei n eine ganze Zahl größer oder gleich 1 ist, in wässrigem Medium, wobei die Reaktionsmischung die folgende molare Zusammensetzung aufweist:

$SiO_2/Al_2O_3$ zwischen 2 und 100, vorzugsweise zwischen 12 und 40,
$H_2O/SiO_2$ zwischen 5 und 60, vorzugsweise zwischen 10 und 40,
$R/SiO_2$ zwischen 0,05 und 0,50, vorzugsweise zwischen 0,10 und 0,40,
$M_{2/n}O/SiO_2$ zwischen 0,05 und 0,40, vorzugsweise zwischen 0,15 und 0,30,
wobei M Natrium ist, wobei der Schritt i) für einen Zeitraum durchgeführt wird, der den Erhalt einer einheitlichen Mischung, die als Vorläufergel bezeichnet wird, ermöglicht;

ii) hydrothermale Behandlung des am Ende von Schritt i) erhaltenen Vorläufergels unter autogenem Druck bei einer Temperatur zwischen 120 °C und 250 °C, vorzugsweise zwischen 150 °C und 230 °C, über einen Zeitraum zwischen 2 und 12 Stunden, vorzugsweise zwischen 2 und 10 Stunden, bis sich der Zeolith vom AFX-Strukturtyp bildet,
iii) mindestens einen Ionenaustausch, umfassend das Inkontaktbringen des am Ende des vorhergehenden Schritts erhaltenen Feststoffs mit einer Lösung, die mindestens eine Spezies, die ein Übergangsmetall in Lösung in reaktiver Form freisetzen kann, umfasst, unter Rühren bei Umgebungstemperatur über einen Zeitraum zwischen 1 Stunde und 2 Tagen, wobei es sich bei dem Übergangsmetall um Kupfer und/oder Eisen handelt und der Gehalt an eingeführtem Übergangsmetall bzw. eingeführten Übergangsmetallen, das bzw. die durch den Ionenaustauschschritt iii) eingeführt wird bzw. werden, zwischen 0,5 bis 6 Massen-%, vorzugsweise zwischen 0,5 und 5 Massen-%, weiter bevorzugt zwischen 1 und 4 Massen-%, bezogen auf die Gesamtmasse des wasserfreien fertigen Katalysators, liegt;
iv) eine Wärmebehandlung, umfassend vorteilhafterweise das Trocknen des am Ende des vorhergehenden Schritts (ii) oder (iii) erhaltenen Feststoffs bei einer Temperatur zwischen 20 und 150 °C, vorzugsweise zwischen 60 und 100 °C, über einen Zeitraum zwischen 2 und 24 Stunden gefolgt von mindestens einer Calcinierung unter gegebenenfalls trockener Luft bei einer Temperatur zwischen 450 und 700 °C, vorzugsweise zwischen 500 und 600 °C, über einen Zeitraum zwischen 2 und 20 Stunden, vorzugsweise zwischen 6 und 16 Stunden, weiter bevorzugt zwischen 8 und 13 Stunden, wobei die Strömungsrate von gegebenenfalls trockener Luft vorzugsweise zwischen 0,5 und 1,5 l/h/g zu behandelndem Feststoff, weiter bevorzugt zwischen 0,7 und 1,2 l/h/g zu behandelndem Feststoff, liegt.

**2.** Verfahren zur Herstellung eines Katalysators nach Anspruch 1, bei dem es sich bei mindestens einer Quelle von mindestens einem Siliciumoxid $SiO_2$ und/oder mindestens einer Quelle von mindestens einem Aluminiumoxid $Al_2O_3$ um mindestens einen Zeolith vom FAU-Strukturtyp mit einem $SiO_2/Al_2O_3$-Molverhältnis zwischen 2,00 und 100 handelt.

**3.** Verfahren nach Anspruch 1 oder 2, bei dem die Schritte iii) und iv) vertauscht und/oder gegebenenfalls wiederholt werden.

**4.** Verfahren zur Herstellung eines Katalysators nach einem der Ansprüche 1 bis 3, bei dem man Kristallkeime eines Zeoliths vom AFX-Strukturtyp zu der Reaktionsmischung von Schritt i) gibt, vorzugsweise in einer Menge zwischen 0,01 und 10 % der Gesamtmasse der Quellen des vierwertigen Elements (Si) und des dreiwertigen Elements (AI) in ihrer Oxidform ($SiO_2$ und $Al_2O_3$), die in der Reaktionsmischung verwendet werden, wobei die Kristallkeime in der Gesamtmasse der Quellen der vierwertigen und dreiwertigen Elemente nicht berücksichtigt werden.

**5.** Verfahren zur Herstellung eines Katalysators nach einem der vorhergehenden Ansprüche, wobei der Schritt i) einen Schritt der Reifung der Reaktionsmischung bei einer Temperatur zwischen 20 und 80 °C mit oder ohne Rühren über einen Zeitraum zwischen 30 Minuten und 24 Stunden umfasst.

**6.** Verfahren zur Herstellung eines Katalysators nach einem der vorhergehenden Ansprüche, wobei der Ionenaustauschschritt iii) durch Inkontaktbringen des Feststoffs mit einer Lösung, die eine einzige Spezies, die ein Übergangsmetall freisetzen kann, umfasst, durchgeführt wird oder durch aufeinanderfolgendes Inkontaktbringen des Feststoffs mit verschiedenen Lösungen, die jeweils mindestens eine Spezies, vorzugsweise eine einzige Spezies, die ein Übergangsmetall freisetzen kann, umfasst, durchgeführt wird, wobei die Übergangsmetalle der verschiedenen Lösungen vorzugsweise voneinander verschieden sind.

## Claims

**1.** Process for preparing a catalyst based on a zeolite of AFX structural type and on at least one transition metal, comprising at least the following steps:

i) the mixing, in an aqueous medium, of at least one source of at least one silicon oxide $SiO_2$, of at least one source of at least one aluminium oxide $Al_2O_3$, of an organic nitrogen-comprising compound R, also referred to as specific structuring agent, 1,6-bis(methylpiperidinium)hexane dihydroxide, of at least one alkali metal and/or one alkaline earth metal M with a valency n, n being an integer greater than or equal to 1, the reaction mixture having the following molar composition:

$SiO_2/Al_2O_3$ between 2 and 100, preferably between 12 and 40
$H_2O/SiO_2$ between 5 and 60, preferably between 10 and 40
$R/SiO_2$ between 0.05 and 0.50, preferably between 0.10 and 0.40
$M_{2/n}O/SiO_2$ between 0.05 and 0.40, preferably between 0.15 and 0.30,
wherein M is sodium, step i) being conducted for a duration that allows a homogeneous mixture, referred to as precursor gel, to be obtained;

ii) the hydrothermal treatment of said precursor gel obtained at the end of step i) under autogenous pressure at a temperature of between 120°C and 250°C, preferably between 150°C and 230°C, for a duration of between 2 and 12 hours, preferably between 2 and 10 hours, until said zeolite of AFX structural type forms,
iii) at least one ion exchange, comprising bringing said solid obtained at the end of the preceding step into contact with a solution comprising at least one species capable of releasing a transition metal, in solution in reactive form with stirring at ambient temperature for a duration of between 1 hour and 2 days, the transition metal being copper and/or iron and the content of transition metal(s) introduced by the ion exchange step iii) being between 0.5% and 6% by mass, preferably between 0.5% and 5% by mass, more preferably between 1% and 4% by mass, relative to the total mass of the anhydrous final catalyst;
iv) a heat treatment advantageously comprising drying the solid obtained at the end of the preceding step (ii) or (iii) at a temperature of between 20 and 150°C, preferably between 60 and 100°C, for a duration of between 2 and 24 hours, followed by at least one calcination under - optionally dry - air at a temperature of between 450 and 700°C, preferably between 500 and 600°C, for a duration of between 2 and 20 hours, preferably between 6 and 16 hours, more preferably between 8 and 13 hours, the flow rate of optionally dry air being preferably between 0.5 and 1.5 L/h/g of solid to be treated, more preferably between 0.7 and 1.2 L/h/g of solid to be treated.

2. Process for preparing a catalyst according to Claim 1, wherein at least one source of at least one silicon oxide $SiO_2$ and/or at least one source of at least one aluminium oxide $Al_2O_3$ is at least one zeolite of FAU structural type having a $SiO_2/Al_2O_3$ molar ratio of between 2.00 and 100.

3. Process according to either of Claims 1 and 2, wherein steps iii) and iv) are reversed and/or optionally repeated.

4. Process for preparing a catalyst according to one of Claims 1 to 3, wherein seed crystals of a zeolite of AFX structural type are added to the reaction mixture of step i), preferably in an amount of between 0.01% and 10% of the total mass of the sources of said tetravalent (Si) and trivalent (Al) elements in their oxide form ($SiO_2$ and $Al_2O_3$) which are used in the reaction mixture, said seed crystals not being taken into account in the total mass of the sources of the tetravalent and trivalent elements.

5. Process for preparing a catalyst according to one of the preceding claims, wherein step i) comprises a step of maturation of the reaction mixture at a temperature of between 20 and 80°C, with or without stirring, for a duration of between 30 minutes and 24 hours.

6. Process for preparing a catalyst according to one of the preceding claims, wherein step iii) of ion exchange is carried out by bringing the solid into contact with a solution comprising a single species capable of releasing a transition metal or by successively bringing the solid into contact with different solutions each comprising at least one, preferably a single, species capable of releasing a transition metal, the transition metals of the different solutions preferably being different from each other.

**Fig. 1**

**Fig. 2**

Exemple 3

Exemple 2

Exemple 5

Exemple 4

Fig. 3

## RÉFÉRENCES CITÉES DANS LA DESCRIPTION

### Documents brevets cités dans la description

- US 5194235 A
- US 20160137518 A
- US 20180093259 A
- US 20160096169 A1
- US 20160096169 A
- JP 2014148441 A
- WO 2017080722 A

### Littérature non-brevet citée dans la description

- **FICKEL, D. W.** ; **LOBO, R. F.** *The Journal of Physical Chemistry C*, 2009, vol. 114 (3), 1633-1640
- **LOBO, R. F** ; **ZONES, S. I** ; **MEDRUD, R. C.** *Chemistry of materials*, 1996, vol. 8 (10), 2409-2411
- **MARTIN NURIA et al.** *APPLIED CATALYSIS B: ENVIRONMENTAL*, 29 May 2017, vol. 217, 125-136
- **HRABANEK, P.** ; **ZIKANOVA, A.** ; **SUPINKOVA, T.** ; **DRAHOKOUPIL, J.** ; **FILA, V.** ; **LHOTKA, M.** ; **BERNAUER, B.** *Microporous and Mesoporous Materials*, 2016, vol. 228, 107-115
- **WANG, D. et al.** *CrystEngComm*, 2016, vol. 18 (6), 1000-1008
- **OGURA et al.** *Bull. Chem. Soc. Jpn.*, 2018, vol. 91, 355-361